# EUROPEAN PATENT SPECIFICATION

(11) **EP 0 718 134 B1**
(45) Date of publication and mention of the grant of the patent: **13.10.1999**
(21) Application number: 95119120.4
(22) Date of filing: 05.12.1995
(51) Int. Cl.: B60J 1/00, B60J 5/10

(54) **A hatch back door structure for motor vehicles**
Heckklappestruktur für Kraftfahrzeuge
Structure de hayon arrière pour véhicules automobiles

(30) Priority: 12.12.1994 IT TO941013
(43) Date of publication of application: 26.06.1996
(73) Proprietor: FIAT AUTO S.p.A., 10135 Torino (IT)
(72) Inventor: Graziano, Franco, I-10051 Avigliana (Torino) (IT)
(74) Representative: Serra, Francesco

(56) References cited:
- EP-A- 0 159 017

## Description

The present invention concerns a hatch back door structure for motor vehicles, more specifically it concerns a hatch back door structure for motor vehicle bodies having a rear window and a rear boot portion, that is to say motor vehicles commonly known in English as the "fast back" or "hatch back" type.

Motor vehicles of the above type usually have a hatch back door which must be opened completely, even to put small articles into the boot, requiring a not inconsiderable effort for opening and especially for subsequently closing the hatch back door.

The object of the present invention is to provide a hatch back door in which it is possible to open only a first part in order to put small objects into the boot, but which can be opened completely to put large objects into the boot.

The present invention achieves the above objects by virtue of a hatch back door structure for a motor vehicle, having the characteristics specifically referred to in the following Claims.

A hatch back door structure according to the pre-characterising portion of Claim 1 is known from EP-A-0159071.

Further characteristics and advantages of the present invention will become clear in the course of the following detailed description, given purely by way of non-limitative example, with reference to the accompanying drawings, in which:
- Figure 1 is a partial perspective view of the rear part of a motor vehicle provided with a hatch back door according to the invention, with the hatch back door closed;
- Figure 2 is a partial perspective view of the hatch back door of the motor vehicle shown in Figure 1, with the second part of the hatch back door open;
- Figure 3 is a partial perspective view of the hatch back door of the motor vehicle of Figure 1, with the hatch back door completely open; and
- Figures 4 to 7 illustrate the lever mechanisms for operating the hatch back door according to the invention shown in side view in the direction indicated IV in Figures 1 to 3, in the various positions of the batch back door of the invention.

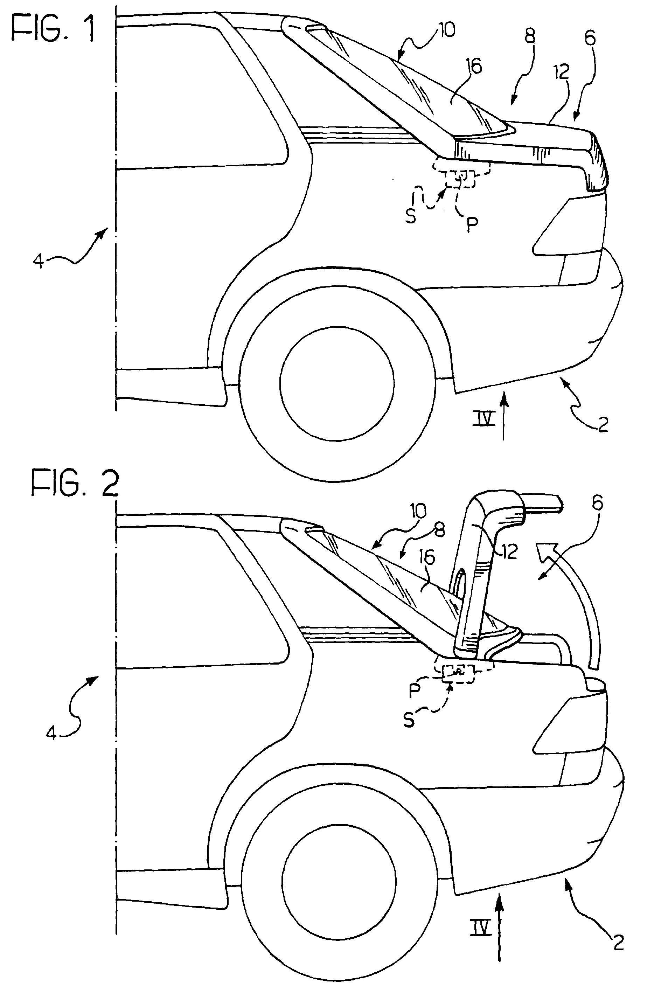

With reference to Figures 1 to 7, reference numeral 2 generally indicates the rear part of a motor vehicle, reference numeral 4 indicates the passenger compartment and reference numeral 6 indicates a rear boot or baggage compartment.

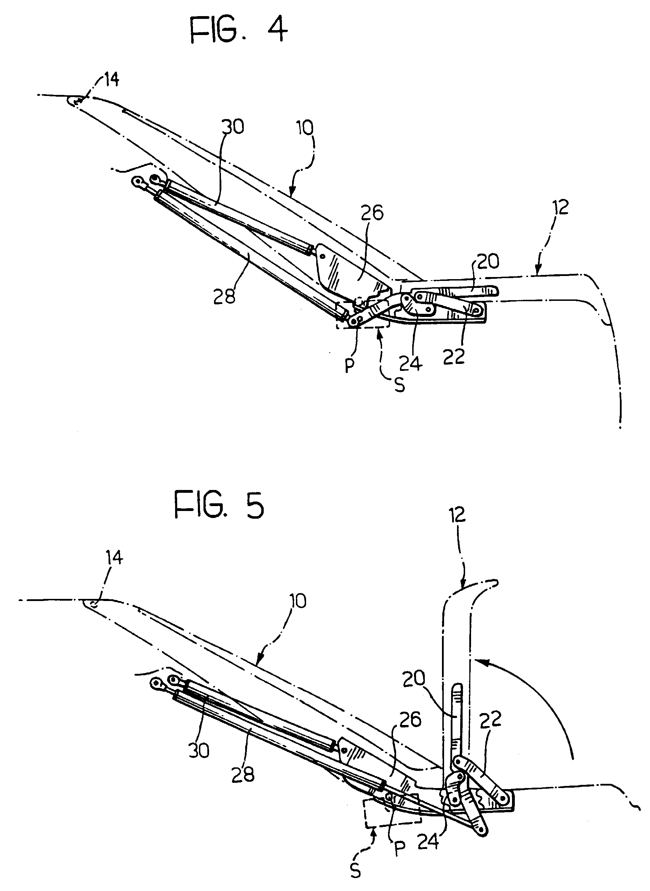

Reference numeral 8 indicates a liftable door assembly comprising two hatch back door parts 10, 12, the first hatch back door part 10, including a rear window 16, being pivotally connected to an upper edge of the body by means of pivot devices 14, for example hinges, only one of which is shown in Figures 4 to 7.

Referring specifically to Figures 4 to 7, the second hatch back door part 12 or boot cover part is fixed to the end of a first arm 20 articulated to the first end of each of a second arm 22 and a third arm 24.

The second ends of each of the second arm 22 and third arm 24 are pivotally connected to a plate 26 fixed to the first door section 10.

A first air spring 28 is rotatably attached to the body and to the free end of the first arm 20, while a second air spring 30 is rotatably attached to the body and to the plate 26.

All of the above (visible in Figures 4 to 7), as indicated by the arrow IV in Figures 1 to 3, applies identically to the other side of the hatch back door according to the invention.

The second hatch back door part 12 or boot cover part is attached at its upper edge by means of the first, second and third arms 20, 22 and 24 respectively to the lower edge of the upper section 10, while its lower edge has the usual lock (not shown) for locking and unlocking the second door part 12 with respect to the body.

The first hatch back door part has lateral pins P only one of which is visible in the drawings, the other pin being symmetrical on the other side of the first door part 10. The pins are intended to engage in clasp locks S in the side part of the motor vehicle body, only one of which is indicated schematically in the drawings.

A release button - for example an electric switch - (not shown) releases the pins from the associated locks thereby freeing the upper part 10 of the rear door 8.

In use, when either only the tail part 12 or the entire hatch back door 8 is to be opened, the usual lock for the locking/unlocking of the hatch back door from the body is initially operated.

Manually lifting the tail part 12 causes it to move from the completely closed position illustrated in Figures 1 and 4 to the completely open position illustrated in Figures 2 and 5.

Opening is facilitated by the air spring 28 (and by the corresponding symmetrical spring not shown). In this position, small objects or packets can be put into the boot.

Whenever the entire hatch back door 8 is to be opened, pressing the electrical switch which controls the locks S (which switch can for example, be positioned inside the boot), releases the pins P from the locks S.

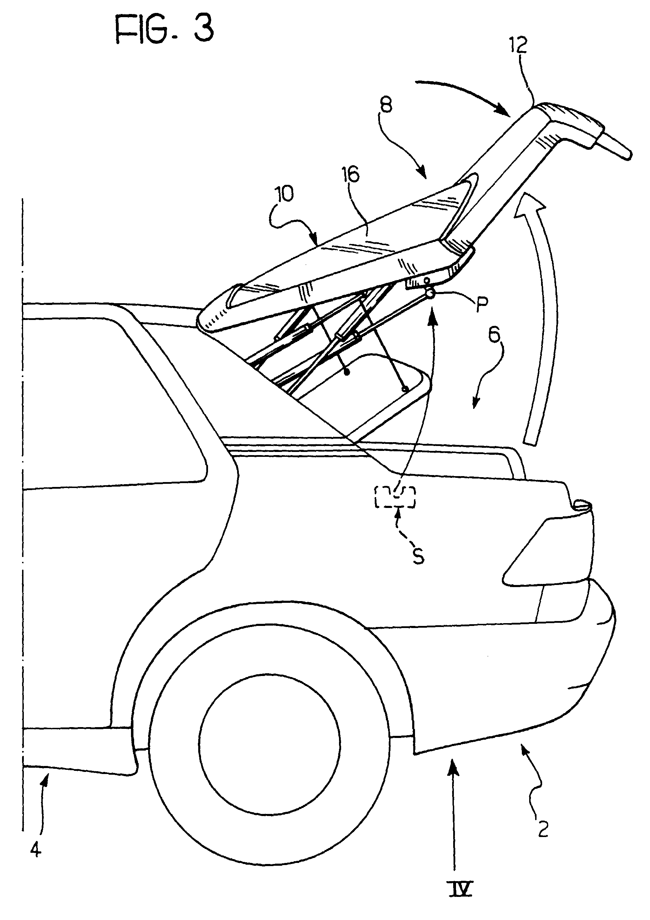

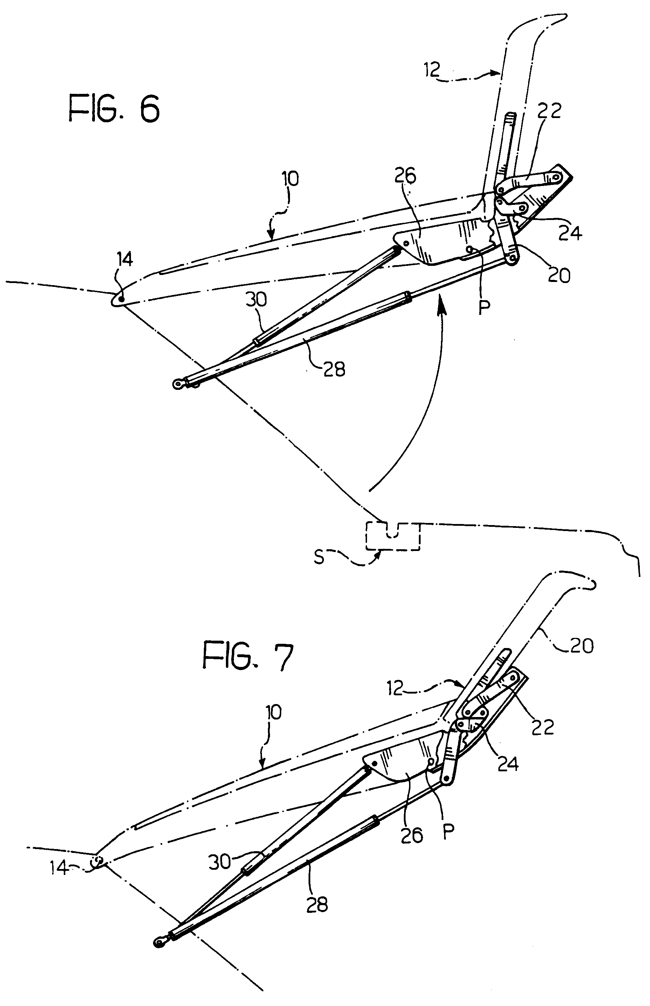

This causes the upper section 10 to move upward assisted by the air spring 30 (and by the symmetrical spring not shown), passing through the position shown in Figure 6 to that shown in Figures 3 and 7, in which the entire hatch back door 8 is completely open and, by virtue of the combined action of the springs 28 and 30 on the lever mechanisms 20, 22, 24, 26, the lower part 12 returns to the relative position with respect to the upper part 10 which it occupies when the hatch back door is completely closed.

When the hatch back door is to be closed, the lower part 12 is pulled downwards until it engages with the usual lock, while the two pins P engage in their respective locks S.

For example, the electric clasp locks can be replaced by others which are mechanically or manually controlled, the type of lever mechanism provided for moving the two hatch back door parts can also be widely varied.

## Claims

1. A hatchback door structure for a motor vehicle having a rear door opening in the rear part (2) of a motor vehicle body, which extends down over an end part of a passenger compartment (4) and over a rear boot or baggage compartment (6), including a liftable tailgate assembly (8) comprising two hatchback door parts (10, 12), the first hatchback door part (10) being pivotally connected by pivotal connection means (14) to an upper edge of the opening in the body and including a rear window (16), the second hatchback door part or boot cover part (12) being pivoted at its upper edge by means of a pivot device (20, 22, 24, 26) to the lower edge of the upper part (10), its lower edge having first locking means intended to lock or release the second lower part (12) with respect to the body, whereby it includes second locking means (P/S) for releasing the lower part of the first upper part (10) from the body, operable to retain the said first part (10) locked to the body after the said first release means is operated, characterised in that the second locking means (P/S) are operable for releasing the lower part of the first upper part (10) from the body after operating the first releasing means, and in that the second releasing means (P/S) are electrically operable by means of a switch positioned inside the boot.

2. A hatchback door structure according to claim 1, characterised in that the said second means (P, S) include at least one lock (S) fixed to the body co-operating with pins (P) fixed to the said first part (10).

## Patentansprüche

1. Heckklappentür-Aufbau für ein Kraftfahrzeug, das eine hintere Türöffnung im hinteren Teil (2) der Karosserie des Kraftfahrzeugs besitzt, der sich über einen Endteil eines Fahrgastraums (4) sowie über eine Hinterhaube oder einen Kofferraum (6) erstreckt, wobei der Heckklappentür-Aufbau einen anhebbaren Heckaufbau (8) aufweist, der zwei Heckklappentürteile (10, 12) besitzt, wobei der erste Heckklappentürteil (10) über eine schwenkbare Verbindungseinrichtung (14) mit einer Oberkante der Öffnung in der Karosserie schwenkbar verbunden ist und eine Heckscheibe (16) aufweist, wobei der zweite Heckklappentürteil oder der Kofferraumabdeckteil (12) an seiner Oberkante über eine Schwenkeinrichtung (20, 22, 24, 26) mit der Unterkante des oberen Teils (10) schwenkbar verbunden ist, wobei seine Unterkante eine erste Verriegelungseinrichtung besitzt, die dazu dient, um den zweiten unteren Teil (12) zur Karosserie zu verriegeln oder freizugeben, wobei der Aufbau eine zweite Verriegelungseinrichtung (P/S) aufweist, um den unteren Teil des ersten oberen Teils (10) von der Karosserie freizugeben, wobei sie in Betrieb gesetzt werden kann, um den ersten Teil (10) mit der Karosserie verriegelt zu halten, nachdem die erste Freigabeeinrichtung betätigt wurde, dadurch gekennzeichnet, dass die zweite Verriegelungseinrichtung (P/S) betätigt werden kann, um den unteren Teil des ersten oberen Teils (10) von der Karosserie freizugeben, nachdem die erste Freigabeeinrichtung betätigt wurde, und dass die zweite Freigabeeinrichtung (P/S) über einen Schalter elektrisch betätigt werden kann, der im Kofferraum angeordnet ist.

2. Heckklappentür-Aufbau gemäß Anspruch 1, dadurch gekennzeichnet, dass die zweite Einrichtung (P, S) zumindest eine Verriegelung (S) aufweist, die an der Karosserie so angebracht ist, dass sie mit Zapfen (P) zusammenwirkt, die am ersten Teil (10) angebracht sind.

## Revendications

1. Structure de hayon arrière pour véhicule automobile comprenant une ouverture de porte arrière dans la partie postérieure (2) d'une carrosserie de véhicule, ladite structure s'étendant vers le bas au-dessus d'une partie terminale d'un compartiment passagers (4) et au-dessus d'un coffre arrière ou compartiment à bagages (6), incluant un ensemble de hayon arrière relevable (8) comprenant deux parties de hayon (10, 12), la première partie de hayon arrière (10) étant connectée en pivotement par des organes de connexion pivotants (14) sur une bordure supérieure de l'ouverture dans la carrosserie, et présentant une fenêtre arrière (16), et la deuxième partie de hayon arrière, ou partie de couvercle de coffre (12) étant montée en pivotement à sa bordure supérieure au moyen de dispositifs à pivot (20, 22, 24, 26) sur la bordure inférieure de la partie supérieure (10), sa bordure inférieure comportant des premiers moyens formant serrure destinés à verrouiller ou à libérer la deuxième partie inférieure (12) par rapport à la carrosserie, et comprenant des deuxièmes moyens de verrouillage (P/S) pour libérer la partie inférieure de la première partie supérieure (10) vis-à-vis de la carrosserie, susceptibles d'être actionnés afin de retenir ladite première partie (10) verrouillée sur la carrosserie après avoir actionné lesdits premiers moyens de libération, caractérisée en ce que les deuxièmes moyens de verrouillage (P/S) sont susceptibles d'être actionnés afin de libérer la partie inférieure de la première partie supérieure (10) depuis la carrosserie après avoir actionné les premiers moyens de libération, et en ce que les deuxièmes moyens de libération (P/S) sont susceptibles d'être actionnés par voie électrique au moyen d'un commutateur positionné à l'intérieur du coffre.

2. Structure de hayon arrière selon la revendication 1, caractérisée en ce que lesdits deuxièmes moyens (P/S) incluent au moins un verrou (S) fixé sur la carrosserie et coopérant avec des tiges (P) fixées sur ladite première partie (10).
